(19) Europäisches Patentamt
European Patent Office
Office européen des brevets

(11) **EP 3 377 870 B1**

(12) **EUROPÄISCHE PATENTSCHRIFT**

(45) Veröffentlichungstag und Bekanntmachung des Hinweises auf die Patenterteilung:
**17.03.2021  Patentblatt 2021/11**

(21) Anmeldenummer: **16794354.7**

(22) Anmeldetag: **11.11.2016**

(51) Int Cl.:
*G01M 3/22* ^(2006.01)    *G01M 3/32* ^(2006.01)

(86) Internationale Anmeldenummer:
**PCT/EP2016/077414**

(87) Internationale Veröffentlichungsnummer:
**WO 2017/084974 (26.05.2017 Gazette 2017/21)**

(54) **LECKSUCHE MIT SAUERSTOFF**

LEAKAGE DETECTION USING OXYGEN

DÉTECTION DE FUITE UTILISANT DE L'OXYGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2015  DE 102015222554**

(43) Veröffentlichungstag der Anmeldung:
**26.09.2018  Patentblatt 2018/39**

(73) Patentinhaber: **Inficon GmbH**
**50968 Köln (DE)**

(72) Erfinder: **WETZIG, Daniel**
**50968 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**WO-A1-01/44775          WO-A1-2006/032591**
**WO-A1-2014/016308     DE-A1- 10 240 295**
**US-A- 5 170 660          US-A1- 2013 025 349**
**US-A1- 2015 226 629**

**Beschreibung**

Die Erfindung betrifft ein Verfahren und eine Vorrichtung zur Detektion eines Lecks an einem Prüfling, der in einer Prüfkammer enthalten ist.

Zur Dichtheitsprüfung von Objekten mit Prüfgas wird üblicherweise das Füllgas im Objekt, welches betriebsbedingt vorhanden ist, zur Analyse verwendet, zum Beispiel Kältemittel im Wärmetauscher eines Kühlschrankes oder einer Klimaanlage. Oder das zu prüfende Objekt wird mit einem Prüfgas befüllt, zum Beispiel mit dem Prüfgas Helium. Es werden drei verschiedene Prinzipien zum Nachweis der austretenden Prüfgase angewendet.

1. Vakuum-Lecksuche
2. Akkumulation
3. Trägergasverfahren

Zur Vakuum-Lecksuche wird im Vakuumsystem der Partialdruck des Prüfgases gemessen und dient als Maß für die Leckrate.

Zur Akkumulation befindet sich der Prüfling in einem geschlossenen Messkammer-Volumen und der zeitliche Verlauf der Zunahme des Prüfgas-Partialdrucks in der Messkammer dient als Maß für die Leckrate.

Zum Trägergasverfahren wird der Prüfling von einem Trägergas umströmt. Das am Prüfling vorbeiströmende Gas trägt aus dem Prüfling austretendes Prüfgas an den Messort, wo ein entsprechender Prüfgas-Sensor die Prüfgaskonzentration im Trägergas misst. Die Differenz aus Prüfgaskonzentration im Trägergas mit und ohne Prüfling dient als Maß für die Leckrate.

Es existieren Messaufgaben, welche mit einfachen Methoden der Dichtheitsprüfung, wie zum Beispiel der Druckabfallmethode, nicht erfüllt werden können. Die Kosten für eine Anlage zum Einsatz des Prüfgases Helium sind oder erscheinen jedoch als zu hoch. Ebenso sind die Verfügbarkeit und die Kosten von Helium nicht stabil. Es ist erstrebenswert alternative Prüfgase nutzen zu können.

Bei der Wahl eines geeigneten Prüfgases zur Dichtheitsprüfung ist zu berücksichtigen, wie hoch und stabil der Partialdruck des Prüfgases in der Prüfumgebung ist. Sauerstoff ist eigentlich als Prüfgas weniger gut geeignet, weil in der Atmosphäre ein Anteil von etwa 21 Prozent vorhanden ist.

Jedoch lässt sich dieser Anteil von ca. 21 Prozent sehr präzise und gleichzeitig einfach mit einer Lambda-Sonde messen. Der Prüfling kann jedoch aus sicherheitstechnischen Gründen nicht mit reinem Sauerstoff zur Prüfung befüllt werden.

Aus WO 2001/044775 A1 ist ein Verfahren bekannt, bei dem zur Lokalisierung eines Lecks an einem Prüfling der Sauerstoffpartialdruck gemessen wird. Bei einer ersten Variante wird der Prüfling evakuiert und von außen mit Hilfe einer Sprühpistole mit sauerstofffreiem Gas besprüht. Im Vakuum des Prüflings wird der Sauerstoffpartialdruck gemessen. Bei einer zweiten Variante wird der Prüfling mit sauerstofffreiem Gas befüllt und gegenüber dem äußeren atmosphärischen Druck mit Überdruck beaufschlagt. Austretendes Gas wird mit einer Schnüffelsonde aufgesogen und einer Vakuumkammer zugeführt, in der sich ein Sauerstoffsensor befindet. Bei einer dritten Variante wird der Prüfling mit sauerstoffhaltigem Gas befüllt und in eine Prüfkammer eingebracht, die evakuiert wird. Im Vakuum der Prüfkammer wird der Sauerstoffpartialdruck gemessen. Bei allen beschriebenen Varianten wird der Sauerstoffanteil im Vakuum gemessen. Es hat sich gezeigt, dass Vakuumbedingungen am Sauerstoffsensor zu einer deutlichen Signaldrift führen und das Messsignal schlecht auszuwerten ist.

WO 2014/016308 A1 beschreibt ein Dichtheitsprüfverfahren, bei dem ein versiegeltes Produkt in eine Atmosphäre aus Luft, Stickstoff oder Sauerstoff eingebracht wird.

US 2015/0226629 A1 beschreibt ein Dichtheitsprüfverfahren, bei dem Gaskomponenten ionisiert werden und die ionisierten Komponenten von einer Detektionseinheit erfasst werden.

Der Erfindung liegt die Aufgabe zugrunde, ein verbessertes Verfahren und eine verbesserte Vorrichtung zur Leckdetektion an einem Prüfling in einer Prüfkammer zu schaffen.

Das erfindungsgemäße Verfahren ist definiert durch die Merkmale der Ansprüche 1 und 2. Die erfindungsgemäße Vorrichtung ist definiert durch die Merkmale der Ansprüche 9 und 10.

Gemäß einer ersten Ausführungsform der Erfindung wird der Prüfling mit einem sauerstofffreien Gas, wie zum Beispiel Stickstoff oder Argon, möglichst ausschließlich befüllt, während die Umgebung des Prüflings innerhalb der Prüfkammer Luft enthält. Der Druck im Prüfling und in der Prüfkammer wird derart eingestellt, dass der Druck im Prüfling größer ist als der Druck in der Prüfkammer im Bereich außerhalb des Prüflings. Im Falle eines Lecks am Prüfling tritt das sauerstofffreie Gas aus dem Prüfling aus und vermindert die Sauerstoffkonzentration in der den Prüfling umgebenden Atmosphäre. Die Verminderung der Sauerstoffkonzentration dient als Maß für die Leckrate.

Gemäß einer zweiten Ausführungsform wird der Prüfling mit Luft befüllt, wohingegen die Prüfkammer ein Gas enthält, das Sauerstoffatome enthaltende Moleküle aufweist, wie zum Beispiel $CO_2$. Auch in dieser Ausführungsform wird der Druck im Prüfling und in der Prüfkammer derart eingestellt, dass der Druck in der Prüfkammer geringer ist als der Druck im Prüfling.

Die Sauerstoffkonzentration wird mit Hilfe eines Sauerstoffsensors, zum Beispiel in Form einer Lambda-Sonde gemessen. Die Messung kann nach dem Akkumulationsverfahren oder nach dem Trägergasverfahren erfolgen.

Entscheidend ist, dass der Sauerstoffpartialdruck oder der Partialdruck von sauerstoffhaltigen Gasen, wie z.B. $CO_2$, an der Lambda-Sonde ausreichend hoch ist und nicht unter Vakuumbedingungen gemessen wird. Unter ausreichend hohem Druck wird ein Sauerstoffpartialdruck von circa 10 mbar oder höher verstanden was einem Luftdruck von etwa 50mbar oder höher entspricht. In diesem Druckbereich ist das Messsignal einer Lambda-Sonde besonders aussagekräftig, wo hingegen bei Vakuumbedingungen mit einem Druck p<<10mbar das Signal nicht verwertbar ist. Hierzu kann die Lambda-Sonde beispielsweise hinter einer die Prüfkammer evakuierenden Pumpe oder einem Kompressor angeordnet sein. Eine Schnüffelsonde oder eine Sprühpistole werden nicht eingesetzt. Ein vollständiges Evakuieren der Prüfkammer ist nicht erforderlich, wie dies bei der oben beschriebenen Variante 3 in WO 2001/044775 A1 der Fall ist. Dort wird der Prüfling mit sauerstoffhaltigem Gas gefüllt. Nur bei ausreichender Evakuierung der Prüfkammer ist eine Messung des Sauerstoffpartialdrucks aussagekräftig, weil nur im Falle eines Lecks am Prüfling Sauerstoff in die Prüfkammer gelangen darf. Wenn alternativ die Prüfkammer mit sauerstofffreiem Gas geflutet wird, während der Prüfling mit sauerstoffhaltigem Gas gefüllt ist, wie ebenfalls in WO 2001/044775 A1 beschreiben, wird sehr viel mehr sauerstofffreies Gas benötigt als bei dem erfindungsgemäßen Verfahren.

Der Betrieb der Lambda Sonde in sauerstofffreiem Gas führt zu einem driftenden Signal, ebenso wie beim Betrieb unter Vakuumbedingungen.

Denkbar ist auch der Betrieb des Sauerstoffsensors (Lambda-Sonde) in einer Atmosphäre aus Molekülen, die Sauerstoffatome enthalten, oder in reiner $CO_2$-Atmosphäre. Der Betrieb in reinem Stickstoff oder reinem Argon ist hingegen nicht praktikabel.

Bei einer Atmosphäre aus Molekülen, die Sauerstoffatome enthalten, oder bei einer $CO_2$-Atmosphäre in der Prüflingsumgebung innerhalb der Prüfkammer wird der Prüfling mit einem Sauerstoffanteil (z.B. Luft) befüllt und der Sauerstoffanstieg in der Prüflingsumgebung gemessen.

Das Befüllen des Prüflings mit sauerstofffreiem Gas, während die Prüfkammer Luft enthält, bietet in Verbindung mit der Messung der Sauerstoffkonzentration bei atmosphärischem Druck den Vorteil, dass die Prüfkammer nicht vollständig evakuiert werden muss. Vielmehr reicht ein geringfügiger Unterdruck gegenüber atmosphärischem Druck oder gar atmosphärischer Druck innerhalb der Prüfkammer. Der Druckunterschied zu dem sauerstofffreien Gas innerhalb des Prüflings muss lediglich ausreichend groß sein. Hierzu ist der Prüfling mit ausreichendem Überdruck zu beaufschlagen.

Bei dem Akkumulationsverfahren wird der zeitliche Verlauf einer möglichen Zunahme des Sauerstoffpartialdrucks in der Luft der Prüfkammer gemessen und dient als Maß für die Leckrate.

Beim Trägergasverfahren wird der Prüfling von Luft als Trägergas umströmt, wobei stromabwärts des Prüflings ein Sauerstoffsensor die Sauerstoffkonzentration im Trägergas misst. Dabei dient die Differenz aus der Sauerstoffkonzentration in Trägergasluft jeweils mit und ohne Prüfling als Maß für die Leckrate. Zur Bestimmung der Sauerstoffkonzentration im Trägergas ohne Prüfling kann stromaufwärts des Prüflings ein weiterer Sauerstoffsensor in dem Gasweg zur Prüfkammer angeordnet sein.

Im Falle des Trägergasverfahrens stellt sich eine konstante, von der Leckage abhängig reduzierte Sauerstoffkonzentration ein. Bei der Messung der Änderung der Sauerstoffkonzentration in der Luft durch zugemischtes, sauerstofffreies Leckgas ist der Sauerstoffanteil in der Luft stromaufwärts des Prüflings beziehungsweise vor der Beimischung des sauerstofffreien Leckgases stabil zu halten. Dies kann über ein Puffer- oder Ausgleichsvolumen mit einer zusätzlichen Drossel als Tiefpass ermöglicht werden.

Im Falle der Messung anhand des Akkumulationsverfahrens wird die Abnahme der Sauerstoffkonzentration über der Zeit gemessen.

Vorzugsweise wird der Totaldruck des Gases in der Prüfkammer und/oder an dem Sauerstoffsensor stabilisiert, um die Nachweisgrenze zu verbessern.

Die Gasmenge im Prüfkammervolumen soll gering gehalten werden. Dies kann über die Absenkung des Totaldrucks im Prüfkammervolumen oder über die Reduzierung des Nettovolumens (Prüfkammerinnenvolumen abzüglich des Prüflingsaußenvolumens) erreicht werden.

Die Erfindung bietet den Vorteil, dass keine teuren Prüfgase einzusetzen sind. Sauerstofffreie Betriebsgase, wie zum Beispiel Argon oder Stickstoff, sind gut verfügbar und preiswert. Die Kosten für einen Sauerstoffsensor sind gering, insbesondere im Falle einer als Massenprodukt aus der Automobilindustrie verfügbaren Lambda-Sonde. Die Messgenauigkeit ist gegenüber der Druckabfallmethode oder gegenüber der Druckanstiegsmethode verbessert. Der vakuumtechnische Aufwand ist im Vergleich zur Helium-Vakuum-Prüfung geringer.

Denkbar ist auch der Betrieb des Sauerstoffsensors (Lambda-Sonde) in einer Atmosphäre aus Molekülen, die Sauerstoffatome enthalten, oder in reiner $CO_2$-Atmosphäre. Der Betrieb in reinem Stickstoff oder reinem Argon ist hingegen nicht praktikabel. Bei einer Atmosphäre aus Molekülen, die Sauerstoffatome enthalten, oder bei einer $CO_2$-Atmosphäre in der Prüflingsumgebung innerhalb der Prüfkammer wird der Prüfling mit einem Sauerstoffanteil (z.B. Luft) befüllt und der Sauerstoffanstieg in der Prüflingsumgebung gemessen.

Im Folgenden werden anhand der Figuren zwei Ausführungsbeispiele näher erläutert. Es zeigen:

Figur 1    das erste Ausführungsbeispiel in schematischer Darstellung und

Figur 2    das zweite Ausführungsbeispiel in schematischer Darstellung.

Bei beiden Ausführungsbeispielen wird der Prüfling 12 mit sauerstofffreiem Prüfgas vollständig befüllt, so dass kein Sauerstoff im Prüfling enthalten ist. Der Prüfling wird anschließend oder zuvor in eine hermetisch verschließbare Prüfkammer 14 eingebracht. In der Prüfkammer 14 ist Luft enthalten.

Die Prüfkammer 14 ist gasleitend mit einer Trägergaspumpe 16, oder alternativ mit einem Kompressor, verbunden. In entsprechender Weise ist die Prüfkammer 14 gasleitend mit einem Sauerstoffsensor 18 in Form einer Lambda-Sonde verbunden. Der Sauerstoffsensor 18 und die Trägergaspumpe 16 sind durch einen Gasweg miteinander verbunden, in dem eine Drossel 22 vorgesehen ist.

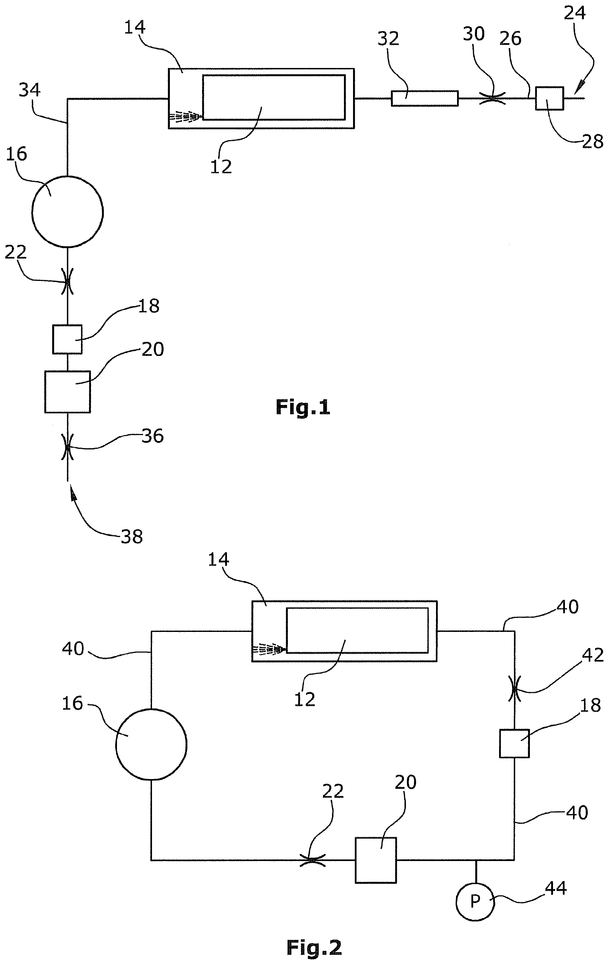

Bei dem Ausführungsbeispiel nach Figur 1 handelt es sich um eine Anordnung zur Messung nach dem Trägergasverfahren. Über den Trägergaseinlass 24 und einen den Trägergaseinlass 24 und die Prüfkammer 14 verbindenden ersten Gasweg 26 wird der Prüfkammer 14 Luft als Trägergas zugeführt. In dem Gasweg kann ein weiterer Sauerstoffsensor 28, insbesondere in Form einer Lambda-Sonde, vorgesehen sein, um den Sauerstoff-Offset, das heißt den ohne Beimischung des Prüfgases aus dem Prüfling 12 in der Luft enthaltenen Sauerstoffanteil, zu bestimmen.

Der Gasweg 26 enthält weiterhin eine weitere Flussdrossel 30 und einen Flusssensor 32. Die dem Gasweg 26 gegenüberliegende Seite der Prüfkammer 14 ist mit einem Ausgangsgasweg 34 verbunden, der die Trägergaspumpe 16, die Drossel 22, den Sauerstoffsensor 18, das Puffervolumen 20 und eine dritte Drossel 36 enthält und zum Gasauslass 38 hinführt.

Mit Hilfe der Trägergaspumpe 16 wird die Luft aus dem Einlass 24 durch die Prüfkammer 14 hindurch an der Oberfläche des Prüflings 12 entlang geführt und dem Sauerstoffsensor 18 zugeführt. Im Falle eines Lecks des Prüflings 12 tritt sauerstofffreies Gas aus dem Prüfling 12 aus und vermischt sich mit der Luft des Trägergases, wodurch der Sauerstoffanteil in der Luft reduziert wird. Dieser Sauerstoffanteil wird mit der Lambda-Sonde (Sauerstoffsensor 18) gemessen.

Das zweite Ausführungsbeispiel gemäß Figur 2 ist zur Messung nach dem Akkumulationsverfahren vorgesehen. Ein Gasweg 40 verbindet zwei einander gegenüberliegende Seiten der Prüfkammer 14. Der Gasweg 40 weist die Trägergaspumpe 16, die Drossel 22, das Puffervolumen 20, einen Totaldrucksensor 44, den Sauerstoffsensor 18 (Lambda-Sonde) und eine weitere Drossel 42 zwischen dem Sauerstoffsensor 18 und der Prüfkammer 14 auf. Die beiden Drosseln 42 und 22 sind auf einander gegenüberliegenden Seiten des Sauerstoffsensors 18 angeordnet. Bei dem Totaldrucksensor 44 kann es sich um einen Differenz-Totaldrucksensor handeln, der den Differenzdruck in Bezug auf den atmosphärischen Umgebungsdruck misst.

Mit Hilfe der Trägergaspumpe 16 wird der Druck in der Prüfkammer 14 im Bereich außerhalb des Prüflings 12 derart vermindert, dass das sauerstofffreie Gas im Prüfling 12 aus einem möglichen Leck des Prüflings heraus in die Prüfkammer 14 strömt. Mit dem Sauerstoffsensor 18 wird kontinuierlich der Sauerstoffpartialdruck der Luft in der Prüfkammer 14 gemessen. Insbesondere wird die Veränderung des Sauerstoffpartialdrucks über der Zeit gemessen, wobei eine Abnahme der Sauerstoffkonzentration auf ein Leck im Prüfling 12 hindeutet und als Maß für die Leckrate dient.

Der Totaldrucksensor 44 dient dazu, aus dem Sauerstoffpartialdrucksignal der Lambda-Sonde und dem gemessenen Totaldruck die Sauerstoffkonzentration bestimmen zu können. Die Sauerstoffkonzentration $C_{O2}$ ist der Quotient aus dem Sauerstoffpartialdruck $P_{O2}$ und dem gemessenen Totaldruck $P_{tot}$:

$$C_{O2} = P_{O2} / P_{tot}$$

**Patentansprüche**

1. Verfahren zur Detektion eines Lecks an einem Prüfling (12), mit folgenden Schritten:

   Einbringen des Prüflings (12) in eine Prüfkammer (14),
   Befüllen des Prüflings (12) mit einem Prüfgas,
   Einstellen des Drucks in der Prüfkammer (14) und des Drucks im Prüfling (12) derart, dass der Prüfkammerdruck geringer ist als der Prüflingsdruck,
   wobei die Prüfkammer (14) Luft enthält und der Prüfling (12) ausschließlich mit einem Gas befüllt wird, das keine Sauerstoffatome enthaltenden Moleküle aufweist, wobei zur Detektion eines Lecks im Prüfling (12) der Sauerstoffanteil der Luft in der Prüfkammer (14) mit einem Sauerstoffsensor (18) gemessen wird,
   **dadurch gekennzeichnet, dass** der Sauerstoffsensor (18) eine Lambda-Sonde ist und der Sauerstoffpartialdruck am Sauerstoffsensor mindestens etwa 10 mbar beträgt.

2. Verfahren zur Detektion eines Lecks an einem Prüfling (12), mit folgenden Schritten:

   Einbringen des Prüflings (12) in eine Prüfkammer (14),
   Befüllen des Prüflings (12) mit einem Prüfgas,
   Einstellen des Drucks in der Prüfkammer (14) und des Drucks im Prüfling (12) derart, dass der Prüfkammerdruck geringer ist als der Prüflingsdruck,
   wobei die Prüfkammer (14) ein Gas enthält, das Sauerstoffatome enthaltende Moleküle aufweist, und der Prüfling (12) mit Luft befüllt wird, wobei zur Detektion eines Lecks im Prüfling (12) der Sauerstoffanteil in der Atmosphäre innerhalb der Prüfkammer (14) mit einem Sauerstoffsensor (18) gemessen wird,
**dadurch gekennzeichnet, dass**
der Sauerstoffsensor (18) eine Lambda-Sonde ist und der Sauerstoffpartialdruck am Sauerstoffsensor mindestens etwa 10 mbar beträgt.

3. Verfahren nach Anspruch 2, **dadurch gekennzeichnet, dass** das Gas, welches Sauerstoffatome enthaltende Moleküle aufweist, Kohlendioxid ist.

4. Verfahren nach einem der Ansprüche 1 - 3, **dadurch gekennzeichnet, dass** bei der Messung des Sauerstoffanteils der zeitliche Verlauf der Veränderung des Sauerstoffpartialdrucks in der Prüfkammer (14) nach dem Akkumulationsprinzip gemessen wird.

5. Verfahren nach einem der Ansprüche 1 - 3, **dadurch gekennzeichnet, dass** der Prüfling (12) innerhalb der Prüfkammer (14) von Luft als Trägergas umströmt wird und nach dem Trägergasverfahren die Veränderung der Sauerstoffkonzentration im Trägergas gemessen wird.

6. Verfahren nach Anspruch 5, **dadurch gekennzeichnet, dass** Schwankungen des Sauerstoffanteils in der den Prüfling (12) umströmenden Luft mit Hilfe eines Puffervolumens (20) und einer Drossel (22, 36, 42) vermindert werden.

7. Verfahren nach einem der vorhergehenden Ansprüche, **dadurch gekennzeichnet, dass** der Totaldruck der Luft an dem Sauerstoffsensor (18) stabil gehalten wird, um die Nachweisgrenze zu reduzieren.

8. Verfahren nach einem der vorhergehenden Ansprüche, **dadurch gekennzeichnet, dass** die Gasmenge innerhalb der Prüfkammer (14) gering gehalten wird, vorzugsweise geringer als die Gasmenge im Prüfling (12).

9. Vorrichtung zur Detektion eines Lecks an einem ausschließlich mit einem Gas, das keine Sauerstoffatome enthaltenden Moleküle aufweist, befüllten Prüfling (12), mit einer den Prüfling (12) aufnehmenden Prüfkammer (14), einer mit der Prüfkammer (14) verbundenen Gaspumpe (16) oder einem Kompressor und einem mit der Prüfkammer (14) verbundenen Gassensor, wobei die Prüfkammer Luft enthält, **dadurch gekennzeichnet, dass** der Gassensor ein Sauerstoffsensor (18) in Form einer Lambda-Sonde ist und der Sauerstoffpartialdruck am Sauerstoffsensor mindestens etwa 10 mbar beträgt.

10. Vorrichtung zur Detektion eines Lecks an einem mit Luft befüllten Prüfling (12), mit einer den Prüfling (12) aufnehmenden Prüfkammer (14), einer mit der Prüfkammer (14) verbundenen Gaspumpe (16) oder einem Kompressor und einem mit der Prüfkammer (14) verbundenen Gassensor, wobei die Prüfkammer (14) ein Gas enthält, welches Sauerstoffatome enthaltende Moleküle enthält, **dadurch gekennzeichnet, dass** der Gassensor ein Sauerstoffsensor (18) in Form einer Lambda-Sonde ist und der Sauerstoffpartialdruck am Sauerstoffsensor mindestens etwa 10 mbar beträgt.

11. Vorrichtung nach Anspruch 9 oder 10, **dadurch gekennzeichnet, dass** der Gasweg (26, 40) zwischen der Pumpe (16), beziehungsweise dem Kompressor, und dem Sauerstoffsensor (18) ein Puffervolumen (20) zur Druckstoßdämpfung aufweist.

12. Vorrichtung nach einem der Ansprüche 9 - 11, **dadurch gekennzeichnet, dass** auf der dem Sauerstoffsensor (18) gegenüberliegenden Seite der Prüfkammer (14) der mit der Prüfkammer (14) verbundene Gasweg (26, 40) eine zusätzliche Sauerstoffsonde (28), insbesondere Lambda-Sonde, aufweist.

## Claims

1. Method for detecting a leak in a test object (12), said method comprising the following steps:

   the test object (12) is inserted into a test chamber (14);
   the test object (12) is filled with a test gas; and the pressure in the test chamber (14) and the pressure in the test object (12) are adjusted such that the test chamber pressure is lower than the test object pressure,
   wherein the test chamber (14) contains air and the test object (12) is filled exclusively with a gas that contains no molecules containing oxygen atoms, wherein, in order to detect a leak in the test object (12), the oxygen proportion of the air in the test chamber (14) is measured with an oxygen sensor,
   **characterized in that**
   the oxygen sensor (18) is a lambda probe and the partial oxygen pressure at the oxygen sensor is at least approximately 10 mbar.

2. Method for detecting a leak in a test object (12), said method comprising the following steps:

   the test object (12) is inserted into a test chamber (14);
   the test object (12) is filled with a test gas;
   the pressure in the test chamber (14) and the pressure in the test object (12) are adjusted such that the test chamber pressure is lower than the test object pressure,
   wherein the test chamber (14) holds a gas that contains molecules containing oxygen atoms, and the test object (12) is filled with air, wherein, for the detection of a leak in the test object (12), the oxygen proportion in the atmosphere inside the test chamber (14) is measured using an oxygen sensor (18),

**characterized in that**

the oxygen sensor (18) is a lambda probe and the partial oxygen pressure at the oxygen sensor is at least approximately 10 mbar.

3. Method of claim 2, **characterized in that** the gas that contains molecules containing oxygen atoms is carbon dioxide.

4. Method of one of claims 1 - 3, **characterized in that** upon measuring the oxygen proportion, the temporal development of the change in the oxygen partial pressure in the test chamber (14) is measured according to the accumulation approach.

5. Method of one of claims 1 - 3, **characterized in that** air flows as a carrier gas around the test object (12) in the test chamber (14) and the change in oxygen concentration in the carrier gas is measured according to the carrier gas method.

6. Method of claim 5, **characterized in that** variations in the oxygen proportion in the air flowing around the test object (12) are reduced using a buffer volume (10) and a throttle (22, 36, 42).

7. Method of one of the preceding claims, **characterized in that** the total pressure of the air at the oxygen sensor (18, 28) is maintained stable to lower the detection limit.

8. Method of one of the preceding claims, **characterized in that** the quantity of gas in the test chamber (15) is kept small, preferably smaller than the gas quantity in the test object (12).

9. Device for detecting a leak in a test object (12) filled exclusively with a gas containing no molecules containing oxygen atoms, comprising a test chamber (14) receiving the test object (12), a gas pump (16) connected to the test chamber (14), or a compressor, and a gas sensor connected to the test chamber (14), wherein the test camber contains air, **characterized in that** the gas sensor is an oxygen sensor (18) in the form of a lambda probe, and the partial oxygen pressure at the oxygen sensor is at least approximately 10 mbar.

10. Device for detecting a leak in a test object (12) filled exclusively with air, comprising a test chamber (14) receiving the test object (12), a gas pump (16) connected to the test chamber (14), or a compressor, and a gas sensor connected to the test chamber (14), wherein the test camber contains gas that contains molecules containing oxygen atoms, **characterized in that** the gas sensor is an oxygen sensor (18) in the form of a lambda probe, and the partial oxygen pressure at the oxygen sensor is at least approximately 10 mbar.

11. Device of claims 9 or 10, **characterized in that** the gas path (26, 40) between the pump (16) or the compressor and the oxygen sensor (18, 28) comprises a buffer volume (20) for pressure surge damping.

12. Device of one of claims 9 - 11, **characterized in that** on the side of the test chamber (14) opposite the oxygen sensor (18), the gas path (26, 40) connected to the test chamber (14) comprises an additional oxygen probe (28), in particular a lambda probe.

**Revendications**

1. Procédé de détection d'une fuite sur un échantillon (12), avec les étapes suivantes :

   introduction de l'échantillon (12) dans une chambre d'essai (14),
   remplissage de l'échantillon (12) avec un gaz de contrôle,
   réglage de la pression dans la chambre d'essai (14) et de la pression dans l'échantillon (12) de sorte que la pression de la chambre d'essai soit inférieure à la pression de l'échantillon,
   dans lequel la chambre d'essai (14) contient de l'air et l'échantillon (12) est exclusivement rempli d'un gaz présentant des molécules ne contenant pas d'atome d'oxygène, dans lequel afin de détecter une fuite dans l'échantillon (12) la fraction d'oxygène de l'air dans la chambre d'essai (14) est mesurée avec un capteur d'oxygène (18),
   **caractérisé en ce que** le capteur d'oxygène (18) est une sonde lambda et la pression partielle d'oxygène au capteur d'oxygène vaut au moins environ 10 mbar.

2. Procédé de détection d'une fuite sur un échantillon (12), avec les étapes suivantes :

   introduction de l'échantillon (12) dans une chambre d'essai (14),
   remplissage de l'échantillon (12) avec un gaz de contrôle,
   réglage de la pression dans la chambre d'essai (14) et de la pression dans l'échantillon (12) de telle sorte que la pression de la chambre d'essai est inférieure à la pression de l'échantillon,
   dans lequel la chambre d'essai (14) contient un gaz présentant des molécules contenant des atomes d'oxygène et l'échantillon (12) est rempli d'air, dans lequel afin de détecter une fuite dans l'échantillon (12) la fraction d'oxygène dans l'atmosphère à l'intérieur de la chambre d'essai (14) est mesurée avec un capteur d'oxygène (18),

**caractérisé en ce que** le capteur d'oxygène (18) est une sonde lambda et la pression partielle d'oxygène au capteur d'oxygène vaut au moins environ 10 mbar.

3. Procédé selon la revendication 2, **caractérisé en ce que** le gaz présentant des molécules contenant des atomes d'oxygène est le dioxyde de carbone.

4. Procédé selon l'une des revendications 1-3, **caractérisé en ce que**, lors de la mesure de la fraction d'oxygène, le déroulement chronologique de la variation de la pression partielle d'oxygène dans la chambre d'essai (14) est mesuré selon le principe d'accumulation.

5. Procédé selon l'une des revendications 1-3, **caractérisé en ce que** l'échantillon (12) est, à l'intérieur de la chambre d'essai (14), placé dans un écoulement d'air en tant que gaz vecteur et la variation de la concentration d'oxygène dans le gaz vecteur est mesurée selon le procédé de gaz vecteur.

6. Procédé selon la revendication 5, **caractérisé en ce que** les fluctuations de la fraction d'oxygène dans l'air s'écoulant autour de l'échantillon (12) sont diminuées à l'aide d'un volume tampon (20) et d'un étranglement (22, 36, 42).

7. Procédé selon l'une des revendications précédentes, **caractérisé en ce que** la pression totale de l'air au capteur d'oxygène (18) est maintenue stable, afin de réduire le seuil de détection.

8. Procédé selon l'une des revendications précédentes, **caractérisé en ce que** la quantité de gaz à l'intérieur de la chambre d'essai (14) est maintenue faible, de préférence plus faible que la quantité de gaz dans l'échantillon (12).

9. Dispositif de détection d'une fuite sur un échantillon (12) rempli exclusivement d'un gaz présentant des molécules ne contenant pas d'atome d'oxygène, doté d'une chambre d'essai (14) accueillant l'échantillon (12), d'une pompe à gaz (16) reliée à la chambre d'essai (14) ou d'un compresseur et d'un capteur de gaz relié à la chambre d'essai (14), dans lequel la chambre d'essai (14) contient de l'air, **caractérisé en ce que** le capteur de gaz est un capteur d'oxygène (18) sous forme d'une sonde lambda et la pression partielle d'oxygène au capteur d'oxygène vaut au moins environ 10 mbar.

10. Dispositif de détection d'une fuite sur un échantillon (12) rempli d'air, doté d'une chambre d'essai (14) accueillant l'échantillon (12), d'une pompe à gaz (16) reliée à la chambre d'essai (14) ou d'un compresseur et d'un capteur de gaz relié à la chambre d'essai (14), dans lequel la chambre d'essai (14) contient un gaz, lequel contient des molécules contenant des atomes d'oxygène, **caractérisé en ce que** le capteur de gaz est un capteur d'oxygène (18) sous forme d'une sonde lambda et la pression partielle d'oxygène au capteur d'oxygène vaut au moins environ 10 mbar.

11. Dispositif selon la revendication 9 ou 10, **caractérisé en ce que** la voie de gaz (26, 40) comporte un volume tampon (20) entre la pompe (16) ou le compresseur et le capteur d'oxygène (18) afin d'amortir les coups de pression.

12. Dispositif selon l'une des revendications 9 - 11, **caractérisé en ce que** sur le côté de la chambre d'essai (14) opposé au capteur d'oxygène (18), la voie de gaz (26, 40) reliée à la chambre d'essai (14) comporte un capteur d'oxygène (28) supplémentaire, en particulier une sonde lambda.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2001044775 A1
- WO 2014016308 A1

- US 20150226629 A1